(19) Europäisches Patentamt
European Patent Office
Office européen des brevets

(11) **EP 1 895 269 A2**

(12) **EUROPEAN PATENT APPLICATION**

(43) Date of publication:
**05.03.2008 Bulletin 2008/10**

(51) Int Cl.:
***G01C 19/56*** (2006.01)

(21) Application number: **07115343.1**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.08.2006 JP 2006233434**

(71) Applicants:
- **Fujitsu Media Devices Limited**
  **Yokohama-shi,**
  **Kanagawa 222-0033 (JP)**
- **FUJITSU LIMITED**
  **Kawasaki-shi,**
  **Kanagawa 211-8588 (JP)**

(72) Inventors:
- **Yamaji, Takayuki**
  **c/o FUJITSU MEDIA DEVICES LIMITED,**
  **Yokohama-shi, Kanagawa 222-0033 (JP)**
- **Ishikawa, Hiroshi**
  **Nakahara-ku**
  **Kawasaki-shi, Kanagawa 211-8588 (JP)**
- **Katsuki, Takashi**
  **Nakahara-ku**
  **Kawasaki-shi, Kanagawa 211-8588 (JP)**
- **Takahashi, Yuji**
  **Nakahara-ku**
  **Kawasaki-shi, Kanagawa 211-8588 (JP)**
- **Nakazawa, Fumihiko**
  **Nakahara-ku**
  **Kawasaki-shi, Kanagawa 211-8588 (JP)**

(74) Representative: **Fenlon, Christine Lesley**
  **Haseltine Lake**
  **5th Floor, Lincoln House**
  **300 High Holborn**
  **London WC1V 7JH (GB)**

(54) **Vibration sensor**

(57)    A vibration sensor includes a tuning-fork vibrator having a base and arms extending from the base, a mounting portion for mounting the tuning-fork vibrator, and multiple supporting members that mount the tuning-fork vibrator on the mounting portion.

Fig. 1

**EP 1 895 269 A2**

**Description**

BACKGROUND OF THE INVENTION

Field of the Invention

The present invention relates to vibration sensors, and more particularly, to a vibration sensor having a tuning-fork vibrator.

2. Description of the Related Art

Vibration sensors such as acceleration sensors and angular velocity sensors having a tuning-fork vibrator sense of vibrations of the vibrator to thus detect acceleration and angular velocity. For example, the angular velocity sensors are used for car navigation systems and image stabilization in digital cameras. Japanese Patent Application Publication No. 2005-49306 (Document 1) discloses a supporting member that mounts a tuning-fork vibrator made of crystalline quartz on a mounting member such as a substrate or a package. The supporting member may be a bump.

The way to mount the tuning-fork vibrator on the mounting member is essential to improve the sensitivity of the vibration sensor. Document 1 discloses that the tuning-fork vibrator is mounted on the mounting member at a single position by use of an electrically conductive adhesive or bump. However, the inventors found out that the mounting way disclosed in Document 1 has a difficulty in improvements on the sensitivity.

SUMMARY OF THE INVENTION

The present invention has been made in view of the above circumstances and provides a vibration sensor having improved sensitivity.

According to an aspect of the present invention, there is provided a vibration sensor including: a tuning-fork vibrator having a base and arms extending from base; a mounting portion for mounting the fork vibrator; and multiple supporting members that mount the tuning-forK vibrator on the mounting portion.

BRIEF DESCRIPTION OF THE DRAWINGS

Embodiments of the present invention will be described in detail based on the following figures, wherein:

Fig. 1 is a perspective view of a vibration sensor according to a first embodiment;
Fig. 2 is a perspective view of a tuning-fork vibrator;
Figs. 3A and 3B show electrode patterns of the tuning-fork vibrator;
Figs. 4A and 4B show vibration modes of the tuning-fork vibrator;
Fig. 5 shows a node line of the tuning-fork vibrator;

Fig. 6A is a plan view of a mounting portion;
Fig. 6B is a plan view of the mounting portion on which a tuning-fork vibrator has been mounted;
Fig. 6C is a cross-sectional view taken along a line A-A shown in Fig. 6B;
Fig. 7A is a top view of the mounting portion to which resin is provided;
Fig. 7B is a cross-sectional view taken along a line B-B shown in Fig. 6B;
Fig. 7C shows a case where excessive resin is applied;
Figs. 8A through 8E show exemplary backsides of the tuning-fork vibrator;
Fig. 9 is a graph of the impedances of drive and sense electrodes as a function of the number of supporting members (bumps);
Figs. 10A through 10E show other exemplary backsides of the tuning-fork vibrator;
Figs. 11A through 11E show further exemplary backsides of the tuning-fork vibrator;
Figs. 12A through 12C show still further exemplary backsides of the tuning-fork vibrator;
Figs. 13A througH 13E are plan views of exemplary arrangements of mounting portion in which a tuning-fork vibrator has been mounted in accordance with a second embodiment; and
Figs. 14A and 14B are cross-sectional views of the mounting portion on which the tuning-fork vibrator is mounted.

DESCRIPTION OF THE PREFERRED EMBODIMENTS

A description will now be given of embodiments of the present invention with reference to the accompanying drawings.

[First Embodiment]

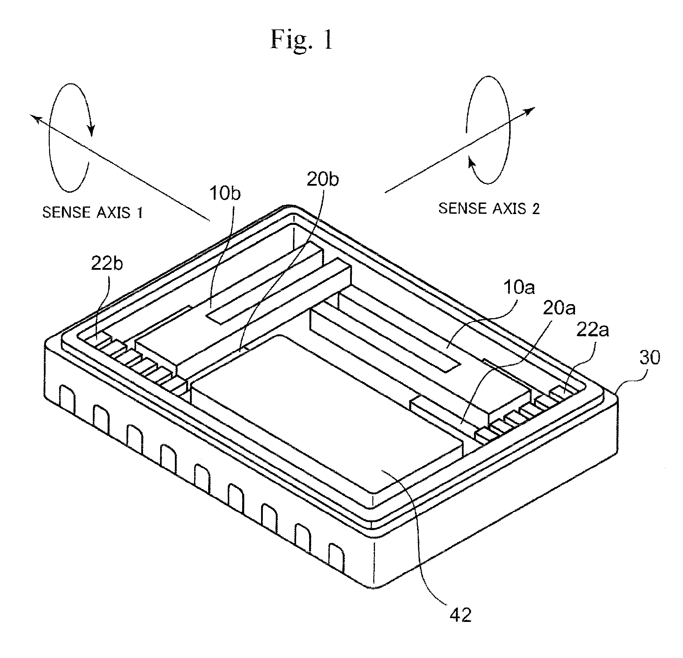

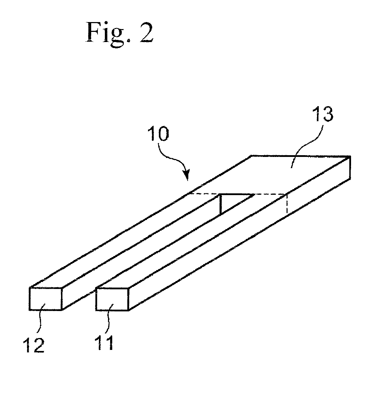

A first embodiment of the present invention is an angular velocity sensor in which two tuning-fork vibrators are mounted on a package. Fig. 1 is a perspective view of the angular velocity sensor of the first embodiment, and Fig. 2 is a perspective view of a tuning-fork vibrator 10. Referring to Fig. 1, the angular velocity sensor of the present embodiment has two tuning-fork vibrators 10a and 10b, each of which corresponds to the tuning-fork vibrator 10 shown in Fig. 2. The vibrators 10a and 10b are respectively mounted on and fixed to mounting portions 20a and 20b of a package 30 of cavity type. Bonding pads 22a and 22b are respectively provided on the mounting portions 20a and 20b. In Fig. 1, there are omitted electrodes of the vibrators 10a and 10b, and bonding wires for making electric connections between these electrodes and pads 22a and 22b. The vibrators 10a and 10b are arranged so as to form a right angle, and have sense axes 1 and 2 that run in the respective longitudinal directions. The sensor is capable of sensing angular velocities about the sense axes 1 and 2 of the vibrators 10a and 10b. A control circuit 42 on which electronic parts are mounted on a circuit board is mounted on the package 30. The control circuit 42 controls the vibrators 10a and 10b. More specifically, control circuit 42 supplies the vibrators 10a and 10b with drive signals, and receives sense signals therefrom. The package 30 is covered with a cap (not shown, and is thus sealed.

Referring to Fig. 2, the tuning-fork vibrator 10 is composed of a base 13 and multiple (two in this figure) arms 11 and 12 expending from the base 13 in parallel. The tuning-fork vibrator 10 is made of $LiNbO_3$ (lithium niobate: LN) or $LiTaO_3$. (lithium tantalate: LT). When LN or LT is used, a 130° to 140° Y-cut plate may be used to obtain a high k23 electromechanical coupling coefficient. Patterns of electrodes are formed on the surfaces of the tuning-fork vibrator 10 by metal films made of Au, Al or Cu.

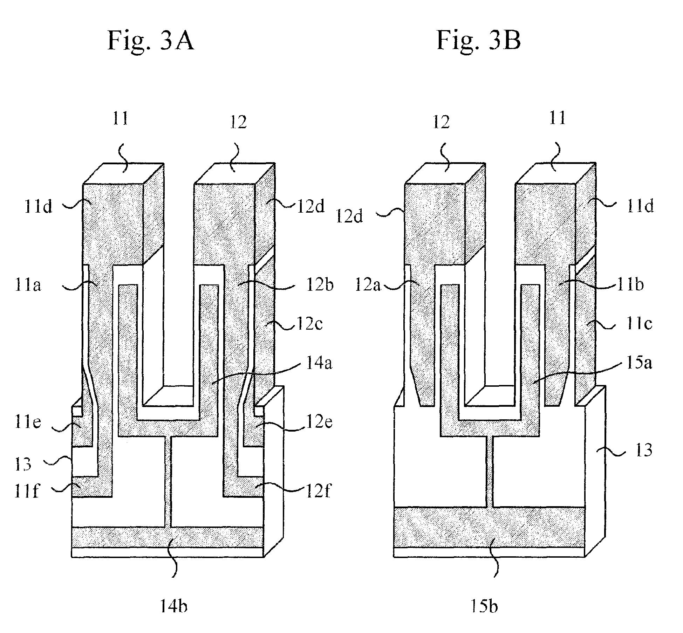

Fig. 3A shows the front side of the tuning-fork vibrator 10, and Fig. 3B shows the back side thereof. The arm 11 is provided with sense electrodes 11a, 11b and 11c. The sense electrodes 11a and 11b are connected by an electrode 11d. An extraction electrode 11f is provided in the sense electrode 11a. The electrode 11c is connected to an extraction electrode 11e. Similarly, the arm 12 is provided with sense electrodes 12a, 12b and 12c. The sense electrodes 12a and 12b are connected by an electrode 12d. An extraction electrode 12f is provided in the electrode 12a. The electrode 12c is connected to an extraction electrode 12e. The drive electrodes 14a are provided on the front side of the tuning-fork vibrator 10, and are connected to an extraction electrode 14b. Similarly, the drive electrodes 15a are provided on the back side of the tuning-fork vibrator 10, and are connected to an extraction electrode 15b.

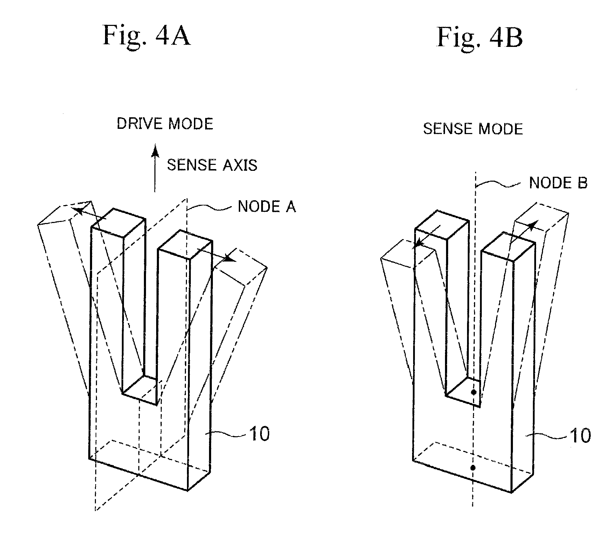

Figs. 4A and 4B show a drive mode and a sense mode, respectively. Referring to Fig. 4A, a drive signal is applied between the drive electrodes 14a and 15a to cause a vibration mode in which the arms 11 and 12 move close to and away from each other in turn. The vibration shown in Fig. 4A is parallel to a plane in which the arms 11 and 12 are included. This is called in-plane vibration mode. An angular velocity applied to the sensing axis produces Coriolis force and causes another vibration mode shown in Fig. 4B in which the arms 11 and 12 move back and forth. This vibration is a twist vibration perpendicular to the plane on which the arms are vibrated. Tills is called plane-vertical vibration mode. The sense electrodes 11a, 11b and 11c and 12a, 12b and 12c sense the plane-vertical vibration mode, so that angular velocities about the sense axes 1 and 2 can be detected. The drive mode is a vibration mode for driving, and the sense mode is a vibration mode for sensing. A node is defined as a portion that does not vibrate in each of the drive and sense modes. In Fig. 3A, a symmetrical plane of the tuning-fork vibrator 10 is node A, and the center axis of the tuning-fork vibrator 10 is node B.

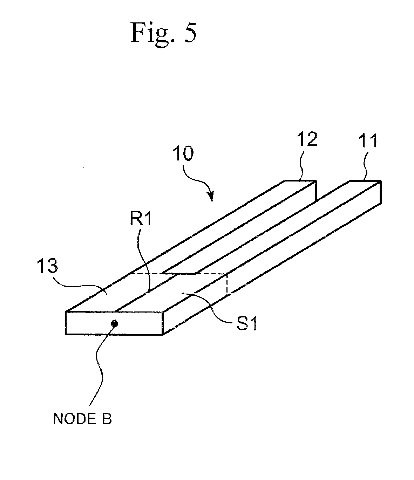

Fig. 5 shows the backside of the tuning-fork vibrator. A node line R1 of the base 13 is defined by projecting a node common to nodes A and node 3 (namely, node B) onto a surface S1 (on which a support portion is formed as will be described later).

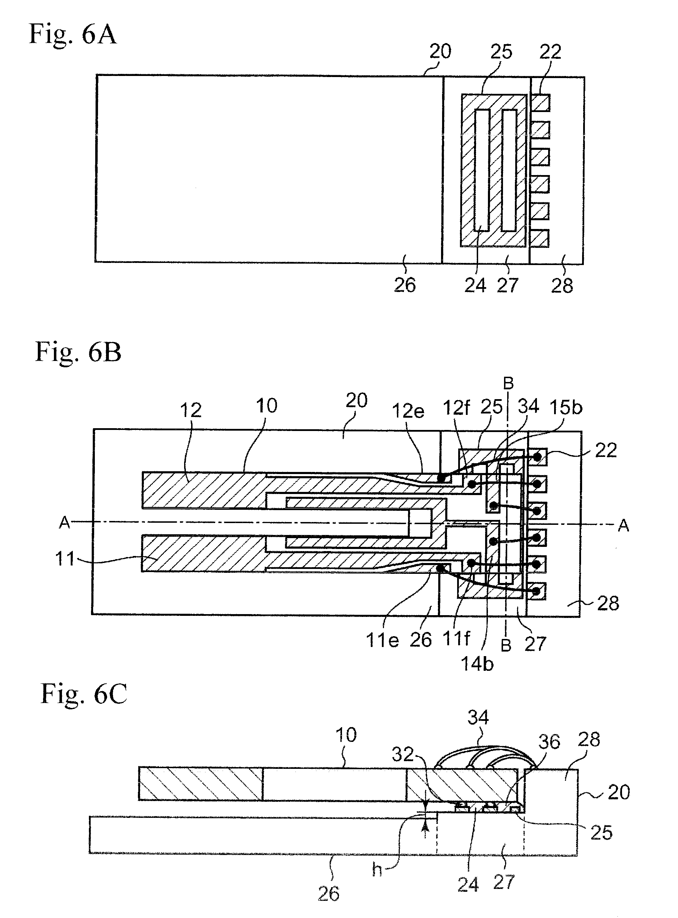

Fig. 6A is a plan view of the tuning-fork vibrator 10, Fig. 6B is a top view of a mounting portion 20 on which the tuning-fork vibrator 10 is mounted, and Fig. 6C is a cross-sectional view taken along a line A-A shown in Fig. 6B. Referring to Fig. 6A, the mounting portion 20 may be made of ceramic, and includes a wire pad portion 28, a vibrator supporting portion 27 and main body portion 26. The wire pad portion 28 has bonding pads 22 to which bonding wires 34 from the tuning-fork vibrator 10 are connected. A pad 25 is provided in the vibrator supporting portion 27. Gold bumps, which function as supporting members 32, are used to connect the tuning-fork vibrator 10 to the pad 25. The pad 25 is provided just below the tuning-fork vibrator 10 and extends outwards so as to go beyond the tuning-fork vibrator 10 laterally. The pad 25 has recess sections 24 in which the mounting portion 20 is exposed. The pads 22 and 25 may be made of gold plating.

Referring to Fig. 6B, the bonding wires 34 make connections between the extraction electrodes 11e, 11f, 12e, 12f, 14b and 15b and the bonding pads 22. The bonding pads 22 are connected to the control circuit 42. The patterns of the extraction electrodes 14b and 15b are partially different from those shown in Figs. 3A and 3B for the convenience' sake. Referring to Fig. 6C, the upper surface of the wire pad portion 28 is approximately as high as the tuning-fork vibrator 10 in order to make it easy to perform bonding from the tuning-fork vibrator 10. The upper surface of the main body portion 26 is lower than the upper surface of the vibrator supporting portion 27 by height h. The tuning-fork vibrator 10 is flip-chip mounted on the pads 25 by using the supporting members 32, which may be gold bumps. A resin portion 36 is provided so as to cover the supporting members 32 in order to reinforce the mounting by the supporting members 32. The resin portion 36 may be adhesive of silicon resin or epoxy region.

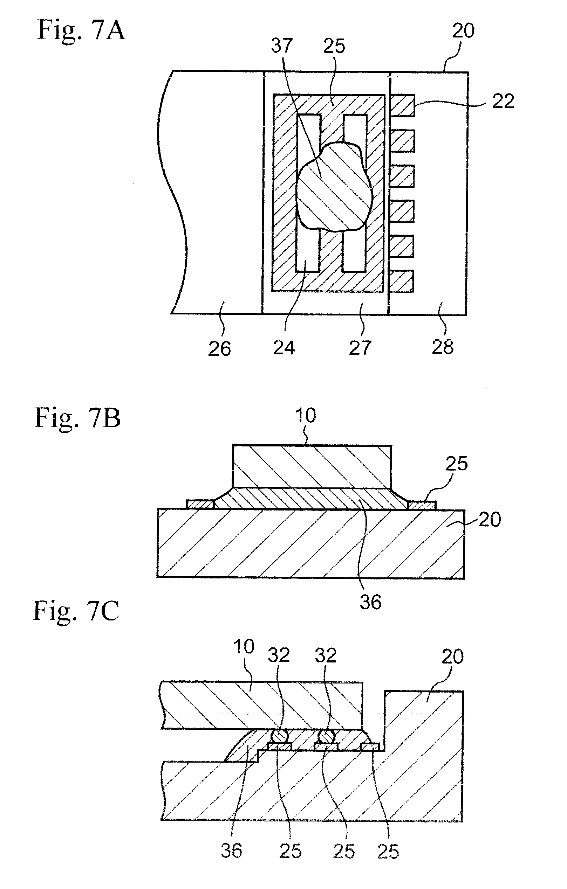

Fig . 7A is a plan view of a way to mount the tuning-fork vibrator 10. An adhesive 37, which may be made of silicon resin or epoxy resin, is provided on the pads 25 and the recess sections 24 on the mounting portion 20. The tuning-fork vibrator 10 having the supporting members 32 is flip-chip mounted on the adhesive 37. Then, the adhesive 37 is pressed against the supporting members 32 so that the supporting members 32 can be electrically connected to the pads 25. The recess sections 24 are arranged so as to extend from an area in the mounting portion 20 on which the supporting members 32 are located to outside areas in the mounting portion 20 beyond the tuning-fork vibrator 10. Thus, the adhesive 37 pressed against the lower surface of the tuning-fork vibrator 10 is guided through the recess sections 24 and goes outside beyond the tuning-fork vibrator 10. Further, a shown in Fig. 7C, the upper surface of the vibrator supporting portion 27 (that is, an area in the mounting portion 20 on which the supporting members 32 are mounted) is higher than the upper surface of the main body-portion 26 (that is, another area in the mounting portion 20 for the arms 11 and 12 of the fork vibrator 10). This causes the excessive adhesive 37 to flow to the upper surface of the main body portion 26. It is thus possible to prevent the adhesive 37 from adhering to unwanted portions such as the backside of the tuning-fork vibrator 10 above the main body portion 26 and the upper surface of the tuning-fork vibrator 10 in the vibrator supporting portion 27.

Preferably, the resin portion 36 is provided in order to improve shock resistance. However, the resin portion 36 may be omitted. The supporting members 32 are connected to the pads 25 to electrically connect the tuning-fork vibrator 10 and the mounting portion 20. It is thus possible to reduce the number of bonding wires. The supporting members 32 may be varied so as to aim at making only mechanical connections without electrical connections.

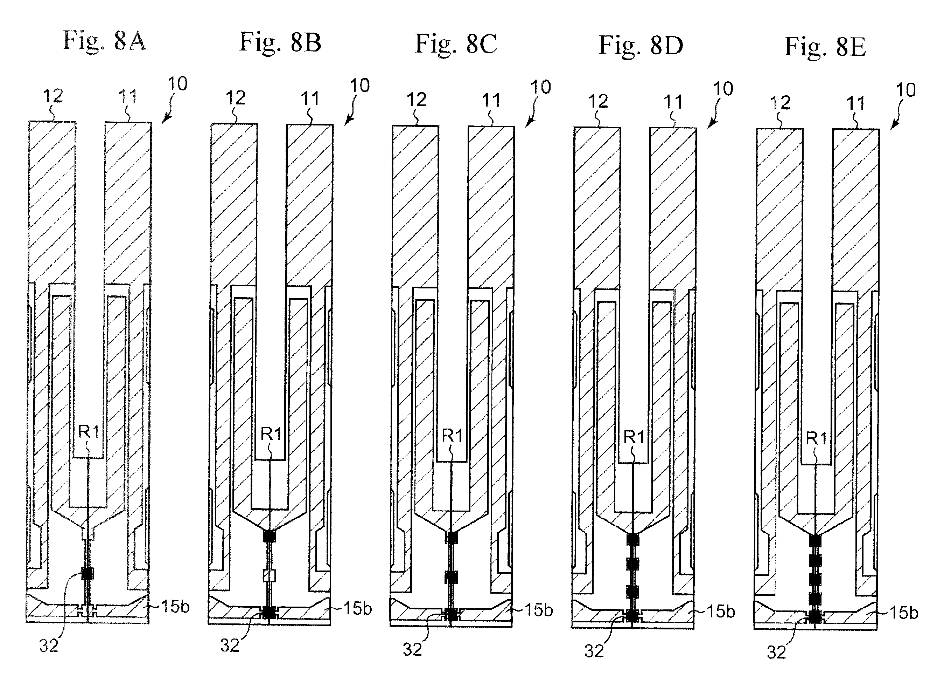

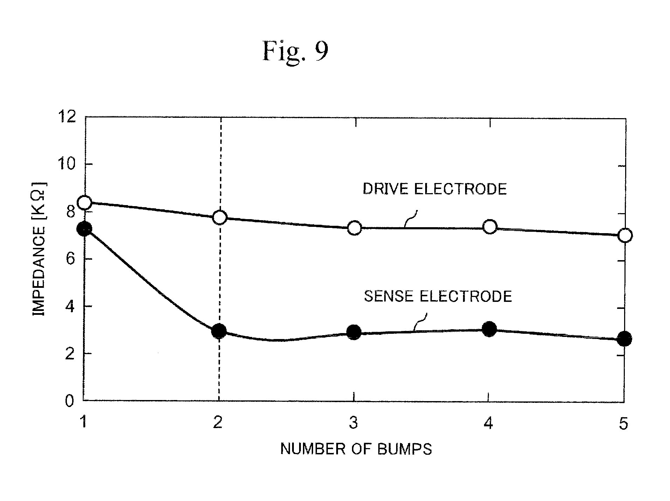

Figs. 8A through 8E respectively show back surfaces of the tuning-fork vibrators 10 that have different numbers of supporting members 32. One to five supporting members 32 are provided on the node lines R1 of the tuning-fork vibrators 10 shown in Figs . 8A through 8E, respectively. Fig. 9 is a graph showing impedances Z of the drive electrodes and sense electrodes of the tuning-fork vibrators 10 mounted on the mounting portions 20, which impedances Z were measured at a resonant frequency. The impedances Z of the drive and sense electrodes were measured via bonding wires, and were not measured via the gold bumps (supporting members 32). Fig. 9 shows that the impedance of the drive electrode does not decrease greatly as the number of bumps increases. In contrast, Fig. 9 shows that the impedances of the sense electrodes of the tuning-fork vibrators 10 having two to five supporting members 32 are approximately half the impedance of the sense electrode of the tuning-fork vibrator 10 having only one supporting member 32.

The sensitivity of the vibration sensor increases as the resonance sharpness Q increases, where Q is defined as follows:

$$Q = 1/4(4\pi ZC(fa - fr)).$$

Where Z is the impedance at the resonant frequency, C is a series capacitance, fa is the anti-resonance frequency, and fr is the resonance frequency. It can be seen from the above expression that Q increases and the sensitivity can be improved as Z decreases. Thus, the sensitivity of the sense electrode can be considerably improved when two or more supporting members 32 are used.

The tuning-fork vibrator 10 is made of a piezoelectric material and is a dielectric body. Thus, the tuning-fork vibrator 10 has a large impedance, and has a reduced impedance at the resonant frequency at which the tuning-fork vibrator 10 vibrates. However, the tuning-fork vibrator 10 has a large impedance, when the vibration of the tuning-fork vibrator 10 is suppressed. Turning back to Fig. 4A, the in-plane vibration mode (the drive mode in the first embodiment) primarily includes vibrations of the arms 11 and 12, and has less vibration in the base 13 than that in the plane-vertical vibration mode (the sense mode in the first embodiment). Thus, the impedance does not change greatly because of the way to mount the base 13. In contrast, the arms 11 and 12 have twist vibration, so that the base 13 has twist vibration. Thus, the way to support the base 13 changes the impedance greatly.

As shown in Fig. 8A, when the tuning-fork vibrator 10 is supported by only one supporting member 32 provided on the node line R1, the node B may be easily vibrated in up and down directions with the supporting member 32 functioning as a supporting point. This may be considered as an increase in the impedance. When the two supporting members 32 on the node line R support the tuning-fork vibrator 10, as shown in Fig. 8B, the node B may have difficulty in vibration in the up and down directions. This may be considered as a decrease in the impedance.

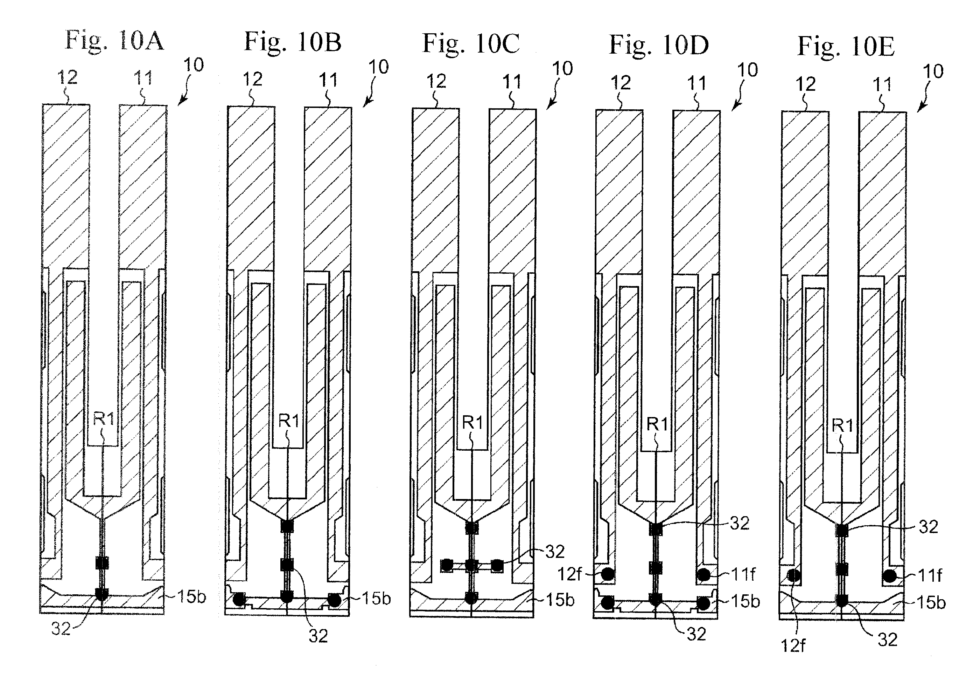

As described above, in order to reduce the impedance in the plane-vertical vibration mode, two ore more supporting members 32 are preferably used to support the tuning-fork vibrator 10. As is shown in Figs . 8B through 8E, multiple supporting members 32 are preferably provided on the node line R1. With these arrangements, it is possible to restrain the up-and-down motion of the node B without affecting twist vibration in the plane-vertical vibration mode. As is shown in Fig. 10A, the distance of the supporting members 32 may be shortened. However, it is preferable that the supporting members 32 are disposed at a comparatively long interval, as shown in Fig. 8B.

Figs. 10B through 12C respectively show exemplary arrangements in which some supporting members 32 are provided at positions that are not on the node line R in order to improve shock resistance. In order to secure the symmetry of vibration, of the tuning-fork vibrator 10, the supporting members 32 are arranged symmetrically about the node line R1, as shown in Figs. 10B through 12C. In order to restrain the up-and-down motion of the node B, it is preferable to arrange some supporting members 32 at different positions in the direction of the node line R1.

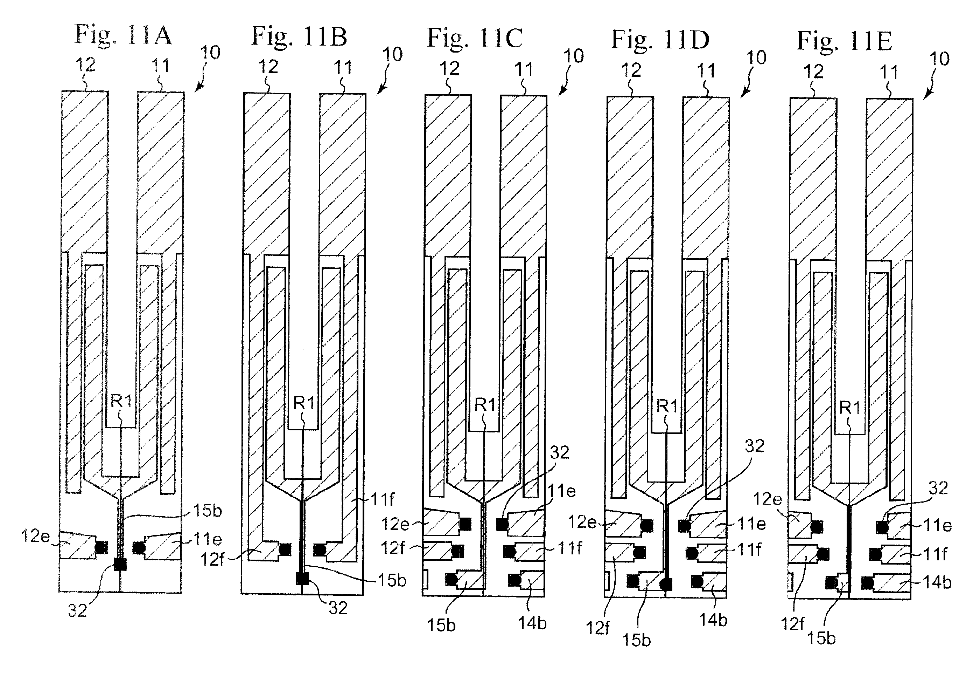

As shown in Fig. 10B through 10E, some supporting members 32 may be provided on the node line R1, and further supporting members 32 may be provided at positions that are not located on the node line R1. In order to prevent twist vibration in the plane-vertical vibration mode from being affected, a shown in Fig. 10B, some supporting members 32 are preferably provided on the rear side of the base 13 opposite to the front side on which the two arms 11 and 12 are provided. As shown in Figs. 10D, 10E, 11A and 11B, supporting members 32 may be provided on the extraction electrodes 11f, 12f and 15b. With these arrangements, a reduced number of bonding wires 34 may be used. As shown in Figs. 10D, 10E and 11B, the electrodes formed on the back surface of the tuning-fork vibrator 10 may be used to handle electric signals supplied to and supplied from the supporting members 32, and electrodes on the front surface thereof may be used to handle electric signals supplied to and from the bonding wires 34. It is thus possible to make connections between the electrodes on the front and back surfaces of the tuning-fork vibrator 10 without using the side surfaces thereof. It is not necessary to form electrodes on the side surfaces of the fork vibrator 10, so that a reduced number of manufacturing steps can be used to fabricate the vibration sensor.

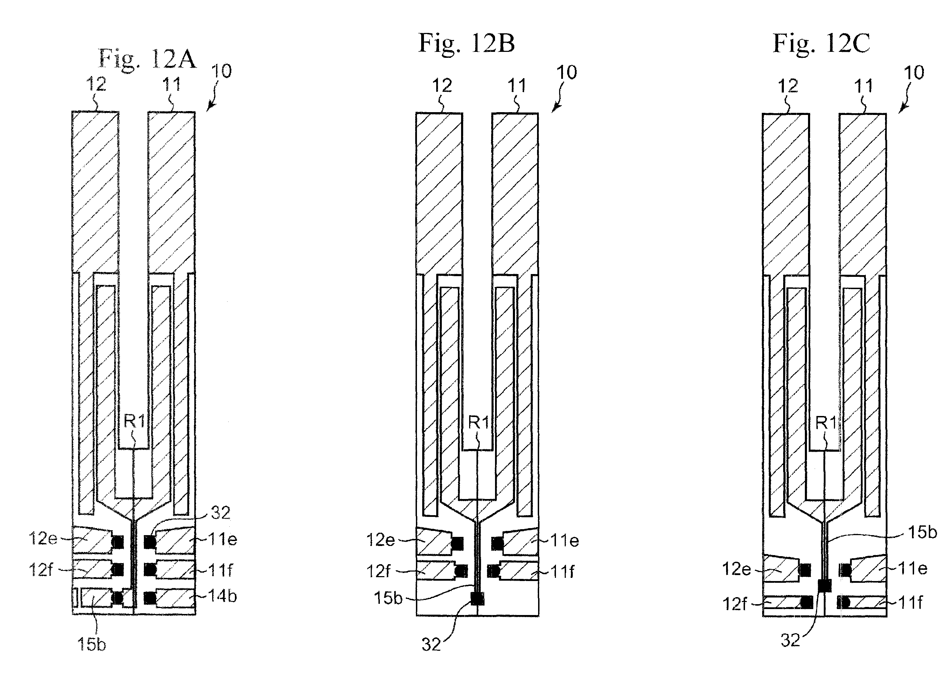

As shown in Figs. 11C, 11D, 11E and 12A, the extraction electrodes 11e, 12e and 14b are extended up to the back surface of the tuning-fork vibrator 10, so that all the extraction electrodes 11e, 11f, 12e, 12f, 14b and 15b are connected to the supporting members 32. This arrangement avoids the use of bonding wires 34 from the front surface of the tuning-fork vibrator 10, and realizes a reduced number of manufacturing steps and downsizing. As shown in Figs. 12B and 12C, the extraction electrodes 11e, 11f, 12e, 12f and 15b may handle electric signals supplied to and supplied from the supporting members 32, and the extraction electrode 14b may handle electric signals supplied to and from the bonding wire 34. As shown in Figs. 11C, 11E and 12A, the supporting members 32 may be not provided on the node line R1.

[Second Embodiment]

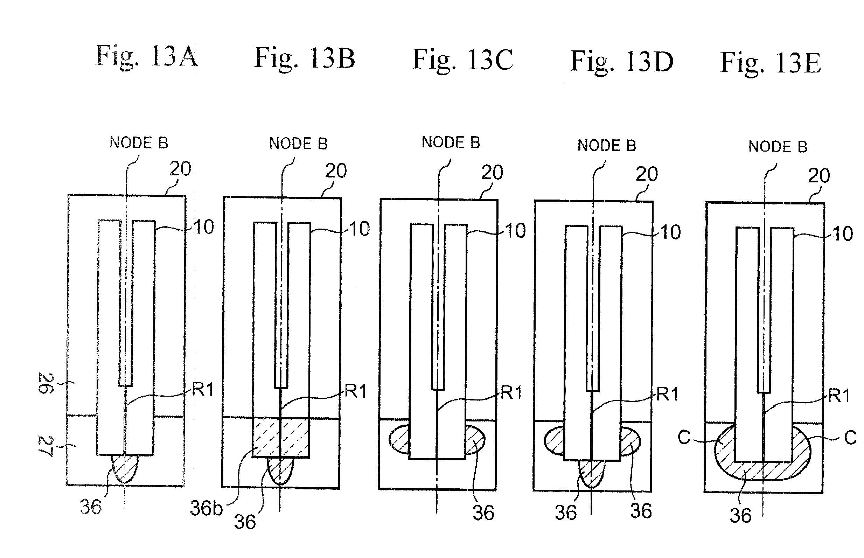

A second embodiment of the present invention has an arrangement in which the resin portion 36 is provided symmetrically about the node B. Figs. 13A through 13E are plan views of the mounting portions 20 and the tuning-fork vibrator 10 in accordance with the second embodiment. A resin portion 36b and the node line R1 are illustrated so as to see through the tuning-fork vibrator 10. The wire pad portion, pads and bonding wires are not illustrated for the sake of simplicity. Fig. 13A shows that the resin portion 36 is provided on the rear side of the base 13 of the tuning-fork vibrator 10. Fig. 13B shows that the resin portion 36 is additionally provided between the tuning-fork vibrator 10 and the vibrator supporting portion 27 of the mounting portion 20, as shown by hatching of broken lines. Fig. 13C shows that the resin portion 36 is provided on opposing sides of the base 13 of the tuning-fork vibrator 10. Fig. 13D shows that the resin portion is separately provided on the rear side and opposing sides of the base 13 of the tuning-fork vibrator 10. Fig. 13E shows that the resin portion 36 is integrally provided on the rear side and opposing sides of the base 13 of the tuning-fork vibrator 10.

If the resin portion 36 is not provided symmetrically about the node line R1, the resin portion 36 asymmetrically holds the tuning-fork vibrator 10. This unbalances moment of inertia of the tuning-fork vibrator 10, and increases leakage of vibration from the tuning-fork vibrator 10 to the mounting portion 20. According to the second embodiment, as shown in Figs. 13A through 13E, the resin portions 36 are provided symmetrically about the node line R1. It is thus possible to restrain leakage of vibration the tuning-fork vibrator 10 to the mounting portion 20 and improve resistance to external shock.

The resin portion 36b may be provided between the tuning-fork vibrator 10 and the mounting portion 20, as shown in Fig. 13B or may be omitted as shown in Figs. 13A, and 13C through 23E. As has been described with reference to Fig. 7A, the resin portion 36b is provided between the tuning-fork vibrator 10 and the mounting portion 20 by providing the adhesive 37 to the mounting portion 20 and then mounting the tuning-fork vibrator 10. The resin portion 36b may be formed by another method. When the tuning-fork vibrator 10 is mounted on the mounting portion 20 using the supporting members 32 and resin is then provided to the side surfaces of the base 13, the resin enters into the gap between the tuning-fork vibrator 10 and the mounting portion 20 due to capillary phenomenon by appropriately selecting involved factors, which may include the viscosity of resin, the affinity between the surface of the tuning-fork vibrator 10 and that of the mounting portion 20, and fillers mixed with the resin. Preferably, the resin portion 36b is uniformly provided, as shown in Fig. 13B. Thus, the resin portion 36b may be provided symmetrically about the node line R1.

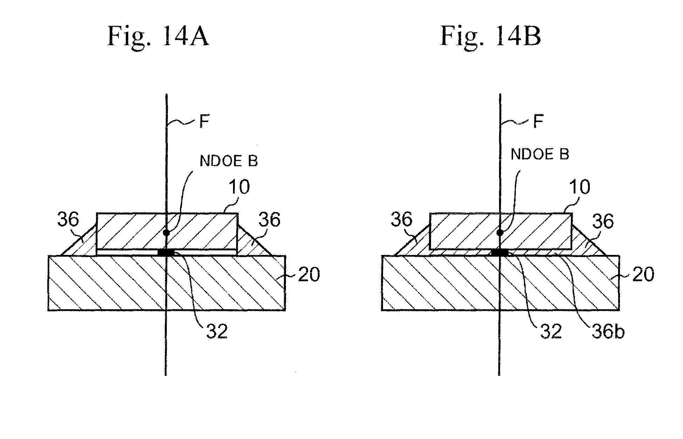

Fig. 14A is a cross-sectional view taken along a line C-C shown in Fig. 13E. The cross section shown in Fig. 14A is vertical to the node B. The cross-sectional shape of the resin portion 36 vertical to the node B of the tuning-fork vibrator 10 is approximately symmetrical with respect to a plane F that includes the node 3 and is vertical to the in-plane vibration plane of the tuning-fork vibrator 10. Fig. 14B shows a variation in which the resin portion 36b is added to the arrangement shown in Fig. 14A. The cross-sectional shape of the resin portion 36 that is symmetrical with respect to the plane F as shown in Figs. 14A and 14B functions to restrain leakage of vibration from the tuning-fork vibrator 10 to the mounting portion 20 and improve resistance to external shock.

The first and second embodiments employ the tuning-fork vibrator 10 having two arms 11 and 12. The present invention is not limited to two arms but may employ any tuning-fork vibrator having multiple arms. The foregoing description refers to the node B that is common to the in-plane vibration mode and the plane-vertical vibration mode. However, the common node B is not essential but it is enough to obtain at least one of nodes of the multiple vibration modes. The use of the common node B is more preferable. In the first and second embodiments, the mounting portion 20 is a part of the package 30 on which the tuning-fork vibrator 10 should be mounted. However, the mounting portion 20 is not limited to the above structure but is essential to have the function of mounting the tuning-fork vibrator 10. The mounting portion 20 may be a part of a mounting board on which the tuning-fork vibrator 10 should be mounted or may be a member other than the package 30 and the mounting board. The supporting members 32 are not limited to the gold bumps but may be another parts having the function of supporting the tuning-fork vibrator 10 on the mounting portion 20. The resin portion 36 is not limited to the aforementioned adhesive but may be another material having the function of reinforcing the tuning-fork vibrator 10. The supporting members 32 have the function of holding the tuning-fork vibrator 10, and the resin portion 36 has the function of securing shock resistance. Thus, it is preferable that the resin portion 36 is softer than the supporting members 32. The first and second embodiments are vibration sensors, each having two tuning-fork vibrators 10. The present invention may include an arbitrary number of tuning-fork vibrators 10. The present invention includes not only the angular velocity sensors but acceleration sensors.

The present invention is not limited to the specifically disclosed embodiments but other embodiments and variations may be made without departing from the scope of the present invention defined by the claims.

**Claims**

1. A vibration sensor comprising:

   a tuning-fork vibrator having a base and arms extending from the base;
   a mounting portion for mounting the tuning-fork vibrator; and
   multiple supporting members that mount the tuning-fork vibrator on the mounting portion.

2. The vibration sensor as claimed in claim 1, wherein the multiple supporting members are bumps.

3. The vibration sensor as claimed in claim 1 or 2, wherein the multiple supporting members electrically connect the tuning-fork vibrator and the mounting portion.

4. The vibration sensor as claimed in any of claims 1 to 3, wherein the multiple supporting members are provided on a node line defined by projecting a node onto a surface on which the multiple supporting members are provided.

5. The vibration sensor as claimed in any of claims 1 to 4, wherein the multiple supporting members are provided symmetrically about a node line defined by projecting a node onto a surface on which the multiple supporting members are provided.

6. The vibration sensor as claimed in any of claims 1 to 5, further comprising a resin portion that reinforces the tuning-fork vibration sensor mounted on the mounting portion.

7. The vibration sensor as claimed in claim 6, wherein the resin portion is provided symmetrically about a node line defined by projecting a node onto a surface on which the multiple supporting members are provided.

8. The vibration sensor as claimed in claim 6 or 7, wherein a cross-sectional shape of the resin portion vertical to the node of the tuning-fork vibrator is symmetrical with respect to a plane that includes the node and is vertical to an in-plane vibration plane of the tuning-fork vibrator.

9. The vibration sensor as claimed in any of claims 6 to 8, wherein the resin portion is uniformly provided between the tuning-fork vibration sensor and the mounting portion.

10. The vibration sensor as claimed in any of claims 6 to 9, further comprising a pad provided on the mounting portion, the pad having a recess section that extends outwards beyond the base of the tuning-fork vibrator.

11. The vibration sensor as claimed in any of claims 6 to 10, wherein the mounting portion has a first upper surface on which the supporting members are provided, and a second upper surface above which the arms are located, the first upper surface being higher than the second upper surface.

# Fig. 1

SENSE AXIS 1

SENSE AXIS 2

10b

20b

22b

10a

20a

22a

30

42

# Fig. 2

Fig. 3A

Fig. 3B

# Fig. 4A

DRIVE MODE

SENSE AXIS

NODE A

10

# Fig. 4B

SENSE MODE

NODE B

10

# Fig. 5

Fig. 6A

Fig. 6B

Fig. 6C

Fig. 7A

Fig. 7B

Fig. 7C

Fig. 8A   Fig. 8B   Fig. 8C   Fig. 8D   Fig. 8E

# Fig. 9

Fig. 10A   Fig. 10B   Fig. 10C   Fig. 10D   Fig. 10E

Fig. 11A   Fig. 11B   Fig. 11C   Fig. 11D   Fig. 11E

Fig. 12A   Fig. 12B   Fig. 12C

Fig. 13A    Fig. 13B    Fig. 13C    Fig. 13D    Fig. 13E

EP 1 895 269 A2

Fig. 14A

Fig. 14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005049306 A